# EUROPEAN PATENT SPECIFICATION

(11) **EP 3 293 217 B1**
(45) Date of publication and mention of the grant of the patent: **13.02.2019**
(21) Application number: 17189330.8
(22) Date of filing: 05.09.2017
(51) Int. Cl.: C09J 109/00

(54) **SILANE-MODIFIED COPOLYMER, MAKING METHOD, AND ADHESION IMPROVER**
SILANMODIFIZIERTES COPOLYMER, HERSTELLUNGSVERFAHREN UND HAFTUNGSVERBESSERER
COPOLYMÈRE MODIFIÉ PAR SILANE, PROCÉDÉ DE FABRICATION ET AGENT D'AMÉLIORATION D'ADHÉSION

(30) Priority: 07.09.2016 JP 2016174727
(43) Date of publication of application: 14.03.2018
(73) Proprietor: Shin-Etsu Chemical Co., Ltd., Chiyoda-ku, Tokyo (JP)
(72) Inventor: HIROKAMI, Munenao, Annaka-shi, Gunma (JP)
(74) Representative: Mewburn Ellis LLP

(56) References cited:
- EP-A2- 1 170 346
- WO-A1-2015/086039
- JP-A- 2001 131 464
- US-A1- 2004 101 689

## Description

### TECHNICAL FIELD

This invention relates to a silane-modified copolymer, a method for preparing the same, and an adhesion improver. More particularly, it relates to a copolymer of polybutadiene skeleton having an acid anhydride functional group and a hydrolysable silyl group, a method for preparing the same, and an adhesion improver comprising the same.

### BACKGROUND

Organosilicon compounds having both a functional group which is reactive with organic materials as typified by an epoxy, amino, acryloyl, methacryloyl, mercapto or isocyanate group or acid anhydride residue and a functional group which is reactive with inorganic materials such as a hydrolysable silyl group are generally known as silane coupling agents. They are often used as a medium capable of forming bonds between inorganic materials and organic materials which are otherwise difficult to bond. By virtue of these characteristics, silane coupling agents are widely used as modifiers for inorganic materials and organic materials, adhesive aids for bonding them, and various additives.

Among others, as the organosilicon compound having an acid anhydride residue and a hydrolysable silyl group, 3-trimethoxysilylpropylsuccinic anhydride and 3-triethoxysilylpropylsuccinic anhydride are commercially available. They find use as a tackifier in pressure-sensitive adhesive compositions (Patent Document 1), a crosslinker in epoxy resin based curable compositions (Patent Document 2), and additives to adhesive compositions (Patent Documents 3 and 4). They are also used in various fields such as a polyimide resin modifier.

It has been demonstrated that organosilicon compounds are effective as the silane coupling agent in a wide variety of applications. The organosilicon compounds, however, still suffer from several problems including high volatility because they are monomers and expensiveness because they are prepared from expensive reactants.

### Citation List

Patent Document 1: JP-A H10-140122
Patent Document 2: JP-A 2006-022158
Patent Document 3: JP-A 2006-282741
Patent Document 4: JP-A 2014-515775 (WO 2012/139965)

### THE INVENTION

An object of the invention is to provide a silane-modified copolymer having acid anhydride functionality, which is fully adhesive to inorganic substrates and low volatile, and can be synthesized from relatively inexpensive reactants.

The inventor has found that a copolymer of polybutadiene skeleton having an acid anhydride functional group and a hydrolysable silyl group is low volatile and fully adhesive to inorganic substrates.

In one aspect, the invention provides a silane-modified copolymer comprising constituent units having the formulae (1), (2) and (3). 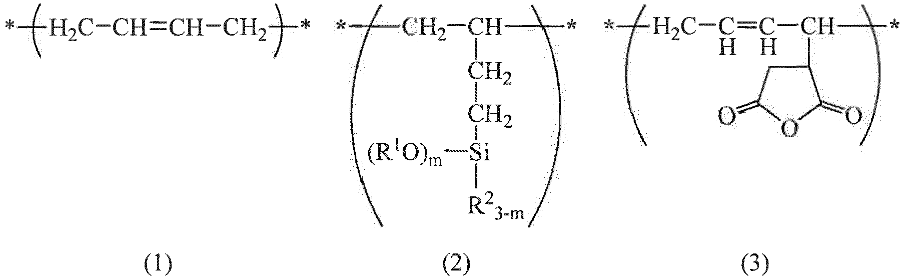 Herein * designates a bond to an adjoining unit, R¹ is each independently a C₁-C₁₀ alkyl group or C₆-C₁₀ aryl group, R² is each independently a C₁-C₁₀ alkyl group or C₆-C₁₀ aryl group, and m is an integer of 1 to 3. The arrangement of constituent units can be arbitrary.

Preferably the silane-modified copolymer has a number average molecular weight of at least 1,000.

In another aspect, the invention provides a method for preparing the silane-modified copolymer defined above, comprising the step of effecting hydrosilylation reaction of a copolymer comprising constituent units having the formulae (1), (3) and (4): 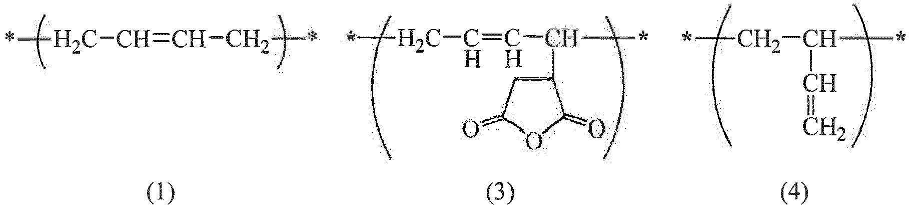 wherein * has the same meaning as above, with an organosilicon compound having the formula (5): 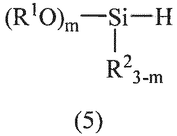 wherein R¹, R² and m are as defined above, in the presence of a platinum compound-containing catalyst.

An adhesion improver comprising the silane-modified copolymer is also contemplated herein, and use of the silane-modified copolymer as an adhesion improver e.g. for adhesive resins is an aspect herein. A further aspect is the resin comprising the silane-modified copolymer.

Throughout the specification, the asterisk (*) in the chemical formula designates a bond to an adjoining unit.

### ADVANTAGEOUS EFFECTS

The silane-modified copolymer having a polybutadiene skeleton, an acid anhydride functional group, and a hydrolysable silyl group is low volatile because of its molecular weight and is found able to develop tight adhesion when compounded in an adhesive composition.

### FURTHER EXPLANATIONS: OPTIONS AND PREFERENCES

One embodiment of the invention is a silane-modified copolymer comprising constituent units having the formulae (1), (2) and (3). In the copolymer, the constituent unit of formula (1) is a constituent unit of butadiene, the constituent unit of formula (2) is a constituent unit having a hydrolysable silyl group, and the constituent unit of formula (3) is a constituent unit having acid anhydride functionality. The arrangement of constituent units is arbitrary.

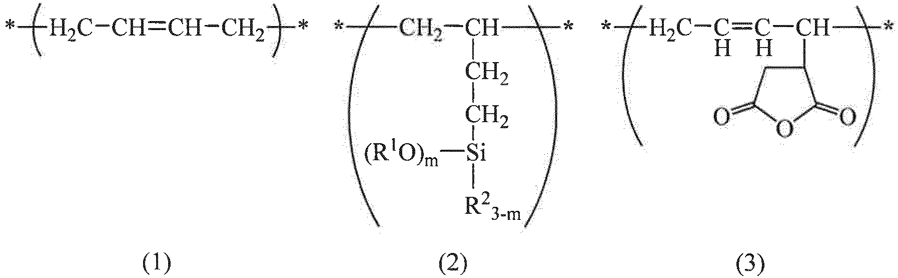

Herein R¹ is each independently a C₁-C₁₀ alkyl group or C₆-C₁₀ aryl group, R² is each independently a C₁-C₁₀ alkyl group or C₆-C₁₀ aryl group, and m is an integer of 1 to 3.

Suitable C₁-C₁₀ alkyl groups may be straight, branched or cyclic and include methyl, ethyl, n-propyl, i-propyl, n-butyl, s-butyl, t-butyl, n-pentyl, n-hexyl, n-heptyl, n-octyl, n-nonyl, n-decyl, cyclopropyl, cyclobutyl, cyclopentyl, cyclohexyl, cycloheptyl, and cyclooctyl. Suitable C₆-C₁₀ aryl groups include phenyl, α-naphthyl and β-naphthyl. Among others, R¹ is preferably a straight alkyl group, more preferably methyl or ethyl. Also R² is preferably a straight alkyl group, more preferably methyl or ethyl.

The silane-modified copolymer should preferably have a number average molecular weight (Mn) of at least 1,000, more preferably at least 2,000 although the Mn is not particularly limited. Notably, Mn is as measured versus polystyrene standards by gel permeation chromatography (GPC).

In the silane-modified copolymer, the constituent units having formulae (1) to (3) are preferably included in a total amount of at least 30 mol%, more preferably at least 50 mol% of the overall units of the copolymer.

For enhancing the tackifying effect of the silane-modified copolymer, the hydrolysable silyl-containing constituent units having formula (2) are preferably included in an amount of at least 2 mol%, more preferably at least 4 mol%. The acid anhydride-containing constituent units having formula (3) are preferably included in an amount of at least 1 mol%, more preferably at least 2 mol%, based on the overall units of the copolymer.

In addition to the constituent units of formulae (1) to (3), the silane-modified copolymer may comprise constituent units having the formula (4) and/or constituent units having the formula (7). The arrangement of constituent units can be arbitrary as well. The silane-modified copolymer may consist or consist essentially of constituent units selected from those of formulae (1), (2), (3), (4) and (7).

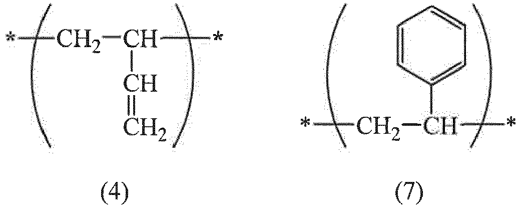

The silane-modified copolymer comprising constituent units of formulae (1) to (3) may be prepared by effecting hydrosilylation reaction of a copolymer comprising constituent units having the formulae (1), (3) and (4) with an organosilicon compound having the formula (5) in the presence of a platinum compound-containing catalyst. 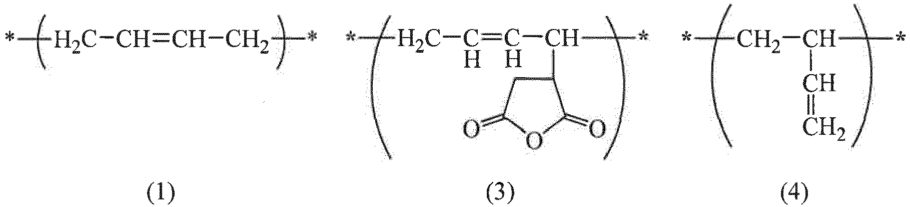 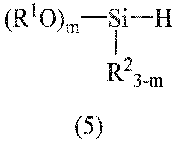 Herein * has the same meaning as above, and R¹, R² and m are as defined above.

Copolymers comprising constituent units having the formulae (1), (3) and (4), i.e. acid anhydride-modified polybutadienes are commercially available. For example, polybutadienes are available under the trade name of Ricon 130 MA8, Ricon 130 MA13, Ricon 130 MA20, Ricon 131 MA5, Ricon 131 MA10, Ricon 131 MA17, Ricon 131 MA20, Ricon 184 MA6, and Ricon 156 MA17 from Cray Valley.

Such acid anhydride-modified polybutadienes are available at a very low cost as compared with allylsuccinic anhydride used as the starting reactant for prior art acid anhydride-containing organosilicon compounds. Therefore, the silane-modified copolymers may be synthesized from these polybutadienes at a low cost as compared with the prior art acid anhydride-containing organosilicon compounds.

Examples of the organosilicon compound having formula (5) include trimethoxysilane, triethoxysilane, dimethoxymethylsilane, and diethoxymethylsilane.

The platinum compound-containing catalyst used in the hydrosilylation reaction is not particularly limited. Suitable catalysts include chloroplatinic acid, alcohol solutions of chloroplatinic acid, toluene and xylene solutions of platinum-1,3-divinyl-1,1,3,3-tetramethyldisiloxane complex, tetrakistriphenylphosphine platinum, dichlorobistriphenylphosphine platinum, dichlorobisacetonitrile platinum, dichlorobisbenzonitrile platinum, and dichlorocyclooctadiene platinum, as well as supported catalysts such as platinum-on-carbon, platinum-on-alumina and platinum-on-silica. In view of selectivity upon hydrosilylation, zero-valent platinum complexes are preferred, with toluene and xylene solutions of platinum-1,3-divinyl-1,1,3,3-tetramethyldisiloxane complex being more preferred.

The amount of the platinum compound-containing catalyst used is not particularly limited. In view of reactivity and productivity, the catalyst is preferably used in an amount to provide 1×10⁻⁸ to 1×10⁻² mole, more preferably 1×10⁻⁷ to 1×10⁻³ mole of platinum atom per mole of the organosilicon compound having formula (5).

A solvent may be used although the reaction can take place in a solventless system. Suitable solvents include hydrocarbon solvents such as pentane, hexane, cyclohexane, heptane, isooctane, benzene, toluene, and xylene, ether solvents such as diethyl ether, tetrahydrofuran, and dioxane, ester solvents such as ethyl acetate and butyl acetate, aprotic polar solvents such as N,N-dimethylformamide, and chlorinated hydrocarbon solvents such as dichloromethane and chloroform, which may be used alone or in admixture.

Although the temperature for hydrosilylation reaction is not particularly limited, it is preferably 0°C to an elevated temperature, more preferably 0 to 200°C. An elevated temperature is preferred for gaining an appropriate reaction rate. In this sense, the reaction temperature is preferably at least 40°C, such as 40 to 110°C, more preferably 40 to 90°C. Although the reaction time is not particularly limited, it is preferably 1 to about 60 hours, more preferably 1 to 30 hours, and even more preferably 1 to 20 hours.

In general, acid anhydride functionality-containing organosilicon compounds are bondable to inorganic substrates such as glass and metals. The silane-modified copolymer of the invention is also useful as an adhesion improver relative to inorganic substrates such as glass and metals. The silane-modified copolymer is a high molecular weight compound having a plurality of hydrolysable silyl groups and acid anhydride groups in the molecule. When blended in epoxy resins, urethane resins, acrylic resins, polyimide resins, silicone resins or modified silicone resins in an amount of 0.1 to 20 % by weight, the silane-modified copolymer helps exert higher adhesion than the prior art acid anhydride-containing organosilicon compounds.

### EXAMPLE

Examples of the invention are given below by way of illustration and not by way of limitation. All parts are by weight (pbw). Mn is a number average molecular weight as measured versus polystyrene standards by gel permeation chromatography (GPC). The viscosity is measured at 25°C by a rotational viscometer.

### 1) PREPARATION OF SILANE-MODIFIED COPOLYMERS

### Example 1-1

A 1-L separable flask equipped with a stirrer, reflux condenser, dropping funnel and thermometer was charged with 207 g of polybutadiene Ricon 130 MA (Mn = 2,700, consisting of units (1), (3) and (4) in a molar ratio of 67/5/28, by Cray Valley) and an amount (1×10⁻⁵ mol of platinum atom) of toluene solution of platinum-1,3-divinyl-1,1,3,3-tetramethyldisiloxane complex. At an internal temperature of 75-85°C, 122 g of trimethoxysilane was added dropwise over 1 hour to the mixture, which was aged at 80°C for 3 hours. At the end of aging, the reaction mixture was concentrated under reduced pressure and filtered, obtaining a brown turbid liquid having a viscosity of 6,000 mPa·s and a Mn of 4,300. The Mn data indicated that the silane-modified copolymer consisted of constituent units having formulae (1), (3) and (6) in a molar ratio (1)/(3)/(6) of 67/5/28. This is designated silane-modified copolymer A.

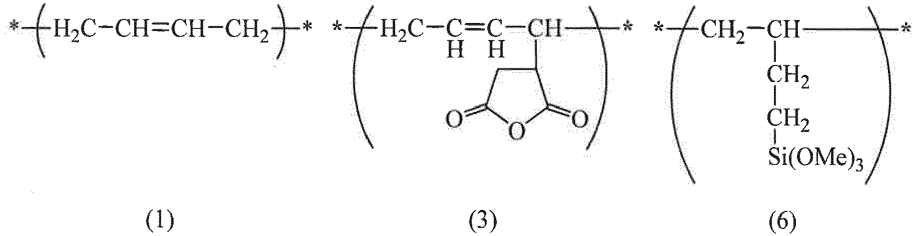

### Example 1-2

A flask as in Example 1-1 was charged with 207 g of polybutadiene Ricon 130 MA (Mn = 2,700, consisting of units (1), (3) and (4) in a molar ratio of 67/5/28, by Cray Valley) and an amount (0.5×10⁻⁵ mol of platinum atom) of toluene solution of platinum-1,3-divinyl-1,1,3,3-tetramethyldisiloxane complex. At an internal temperature of 75-85°C, 61 g of trimethoxysilane was added dropwise over 1 hour to the mixture, which was aged at 80°C for 3 hours. At the end of aging, the reaction mixture was concentrated under reduced pressure and filtered, obtaining a brown turbid liquid having a viscosity of 5,700 mPa·s and a Mn of 3,500. The Mn data indicated that the silane-modified copolymer consisted of constituent units having formulae (1), (3), (4) and (6) in a molar ratio (1)/(3)/(4)/(6) of 67/5/14/14. This is designated silane-modified copolymer B.

### Example 1-3

A flask as in Example 1-1 was charged with 207 g of polybutadiene Ricon 130 MA (Mn = 2,700, consisting of units (1), (3) and (4) in a molar ratio of 67/5/28, by Cray Valley) and an amount (0.5×10⁻⁵ mol of platinum atom) of toluene solution of platinum-1,3 -divinyl-1,1,3,3 -tetramethyldisiloxane complex. At an internal temperature of 75-85°C, 82 g of triethoxysilane was added dropwise over 1 hour to the mixture, which was aged at 80°C for 3 hours. At the end of aging, the reaction mixture was concentrated under reduced pressure and filtered, obtaining a brown turbid liquid having a viscosity of 5,200 mPa·s and a Mn of 3,800. The Mn data indicated that the silane-modified copolymer consisted of constituent units having formulae (1), (3), (4) and (8) in a molar ratio (1)/(3)/(4)/(8) of 67/5/14/14. This is designated silane-modified copolymer C.

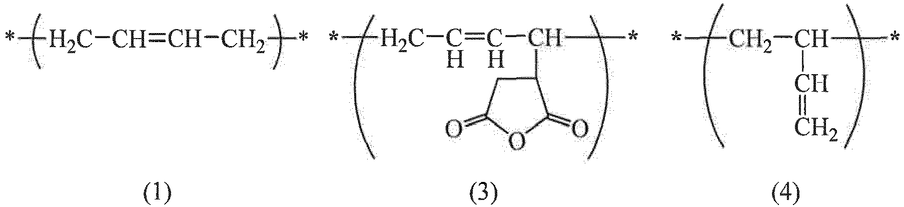

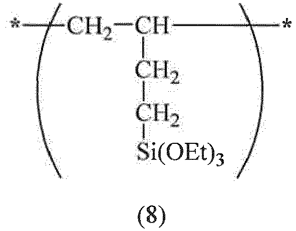

### Example 1-4

A flask as in Example 1-1 was charged with 223 g of polybutadiene Ricon130 MA13 (Mn = 2,900, consisting of units (1), (3) and (4) in a molar ratio of 63/9/28, by Cray Valley) and an amount (0.5×10⁻⁵ mol of platinum atom) of toluene solution of platinum-1,3-divinyl-1,1,3,3-tetramethyldisiloxane complex. At an internal temperature of 75-85°C, 61 g of trimethoxysilane was added dropwise over 1 hour to the mixture, which was aged at 80°C for 3 hours. At the end of aging, the reaction mixture was concentrated under reduced pressure and filtered, obtaining a brown turbid liquid having a viscosity of 16,000 mPa·s and a Mn of 3,700. The Mn data indicated that the silane-modified copolymer consisted of constituent units having formulae (1), (3), (4) and (6) in a molar ratio (1)/(3)/(4)/(6) of 67/5/14/14. This is designated silane-modified copolymer D.

### Volatility of silane-modified copolymer

The silane-modified copolymers A to D of Examples 1-1 to 1-4, and organosilicon compound E of Comparative Example 1-1 were evaluated for volatility by the following test. It is noted that the organosilicon compound E is 3-trimethoxysilylpropylsuccinic anhydride (X-12-967 by Shin-Etsu Chemical Co., Ltd.).

The test was performed by adding 1 g of a compound (sample) dropwise to an aluminum dish, holding the dish open in a thermostat chamber at 150°C for 3 hours, and weighing the residue as nonvolatile. A higher nonvolatile value indicates that the compound has low volatility. The test results are shown in Table 1.

**Table 1**

| | Compound | Nonvolatile (%) |
|---|---|---|
| Example 1-1 | Silane-modified copolymer A | 99 |
| Example 1-2 | Silane-modified copolymer B | 99 |
| Example 1-3 | Silane-modified copolymer C | 99 |
| Example 1-4 | Silane-modified copolymer D | 99 |
| Comparative Example 1-1 | Organosilicon compound E | 10 |

As seen from Table 1, the silane-modified copolymers A to D of Examples 1-1 to 1-4 are low in volatility.

Since the silane-modified copolymer embodying the invention volatilizes little during high-temperature coating, it can develop necessary properties when used in a necessary minimum amount, offering an economic benefit. It causes no or little contamination to the surrounding equipment. An improvement in productivity is also expectable.

### 2) ADHESION IMPROVER

### Examples 2-1 to 2-4 and Comparative Examples 2-1 to 2-3

Epoxy resin compositions were prepared by adding the silane-modified copolymers A to D of Examples 1-1 to 1-4, or organosilicon compound E, to an epoxy resin. Comparative Example 2-3 did not contain any organosilicon compound. The epoxy resin compositions were evaluated for adhesion. Specifically, the epoxy resin composition was coated onto a glass plate to a thickness of 10 µm by means of a bar coater, the coating was cured at 150°C for 1 hour, and the cured coating was tested by a cross-hatch adhesion test according to JIS K 5400. The result is expressed as the number of non-peeled sections per 100 sections.

**Table 2**

| Composition (pbw) | Example | | | | Comparative Example | | |
|---|---|---|---|---|---|---|---|
| | 2-1 | 2-2 | 2-3 | 2-4 | 2-1 | 2-2 | 2-3 |
| Epoxy resin | 98 | 98 | 98 | 98 | 98 | 98 | 98 |
| Catalyst | 2 | 2 | 2 | 2 | 2 | 2 | 2 |
| Silane-modified copolymer A | 0.5 | | | | | | |
| Silane-modified copolymer B | | 0.5 | | | | | |
| Silane-modified copolymer C | | | 0.5 | | | | |
| Silane-modified copolymer D | | | | 0.5 | | | |
| Organosilicon compound E | | | | | 2.0 | 0.5 | |

| Test results | | | | | | | |
|---|---|---|---|---|---|---|---|
| Adhesion | 100/100 | 100/100 | 100/100 | 100/100 | 80/100 | 50/100 | 30/100 |

| | | | | | | | |
|---|---|---|---|---|---|---|---|
| Epoxy resin: YDPN638 by Nippon Steel & Sumitomo Metal Corp. Catalyst: 2-methylimidazole | | | | | | | |

As seen from Table 2, the silane-modified copolymers embodying the invention were effective for improving the adhesion of epoxy resin compositions to glass even when added in a very small amount.

### Notes

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the silane-modified copolymer, method, adhesion improver and use constitutes the proposal of general combinations of those general preferences and options for the different features, insofar as they are combinable and compatible and are put forward in the same context.

As a precaution in case of translation error the entire disclosure of Japanese Patent Application No. 2016-174727, the priority of which is claimed, is incorporated herein by reference.

Although some preferred embodiments have been described, many modifications and variations may be made thereto in the light of the above teachings. It is therefore to be understood that the invention may be practised otherwise than as specifically described without departing from the scope of the general teachings herein.

## Claims

1. A silane-modified copolymer comprising constituent units having the formulae (1), (2) and (3): 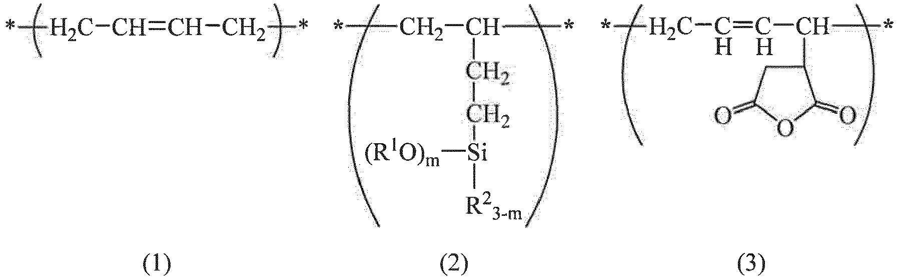 wherein * designates a bond to an adjoining unit, each R¹ independently is a C₁-C₁₀ alkyl group or C₆-C₁₀ aryl group, each R² independently is a C₁-C₁₀ alkyl group or C₆-C₁₀ aryl group, and m is an integer of 1 to 3, and wherein the arrangement of constituent units is arbitrary.

2. A silane-modified copolymer of claim 1 having a number average molecular weight of at least 1,000.

3. A silane-modified copolymer of claim 1 or 2 in which, based on the overall units of the copolymer, constituent units having formula (2) are included in an amount of at least 2 mol% and acid anhydride-containing constituent units having formula (3) are included in an amount of at least 1 mol%.

4. A silane-modified copolymer of claim 1 or 2 in which, based on the overall units of the copolymer, constituent units having formula (2) are included in an amount of at least 4 mol%.

5. A silane-modified copolymer of claim 1, 2 or 4 in which, based on the overall units of the copolymer, acid anhydride-containing constituent units having formula (3) are included in an amount of at least 2 mol%.

6. A silane-modified copolymer of any one of the preceding claims in which constituent units having formulae (1), (2) and (3) constitute at least 50 mol% of the overall units of the copolymer.

7. A silane-modified copolymer of any one of the preceding claims in which, in addition to the constituent units of formulae (1), (2) and (3), the silane-modified copolymer comprises constituent units having the formula (4) and/or constituent units having the formula (7):

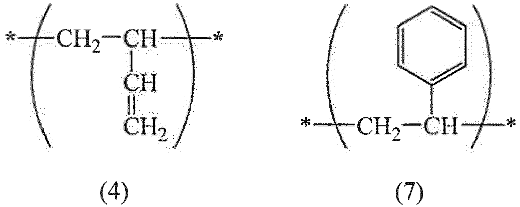

8. A method for preparing a silane-modified copolymer of any one of claims 1 to 7 comprising the step of effecting hydrosilylation reaction of a copolymer comprising constituent units having the formulae (1), (3) and (4): 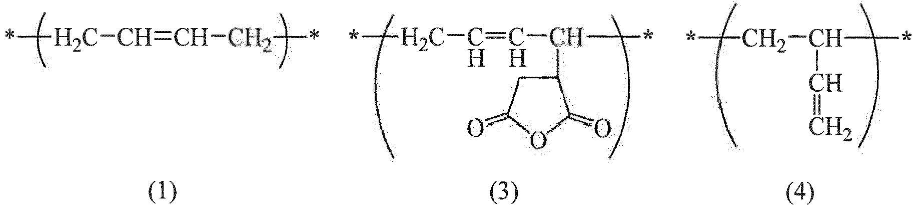 wherein * has the same meaning as above, with an organosilicon compound having the formula (5): 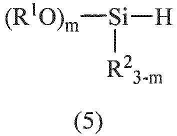 wherein R¹, R² and m are as defined above, in the presence of a platinum compound-containing catalyst.

9. An adhesion improver comprising a silane-modified copolymer of any one of claims 1 to 7.

10. The use, as an adhesion improver, of a silane-modified copolymer of any one of claims 1 to 7.

11. The use of claim 10 in which the silane-modified copolymer is blended in an adhesive resin.

12. The use of claim 11 in which the resin is selected from epoxy resins, urethane resins, acrylic resins, polyimide resins, silicone resins and modified silicone resins.

13. The use of claim 11 or 12 in which the silane-modified copolymer is blended in the adhesive resin in an amount of 0.1 to 20 % by weight.

## Patentansprüche

1. Silan-modifiziertes Copolymer, das Grundeinheiten der folgenden Formeln (1), (2) und (3) aufweist: 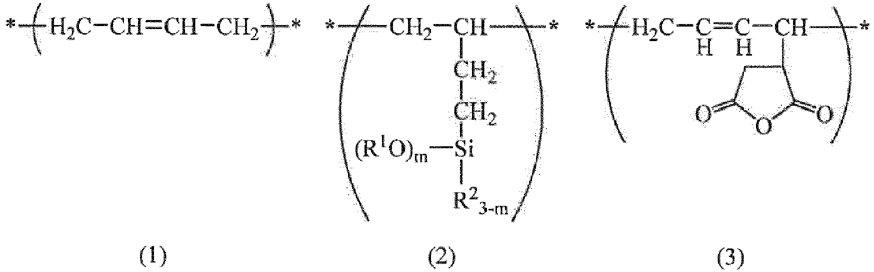 worin * eine Bindung zu einer benachbarten Einheit bezeichnet, die R¹ jeweils unabhängig voneinander eine C₁-C₁₀-Arylgruppe sind und m eine ganze Zahl von 1 bis 3 ist und worin die Anordnung der Grundeinheiten beliebig ist.

2. Silan-modifiziertes Copolymer nach Anspruch 1, das ein zahlenmittleres Molekulargewicht von zumindest 1000 aufweist.

3. Silan-modifiziertes Copolymer nach Anspruch 1 oder 2, in dem, bezogen auf alle Einheiten des Copolymers, Grundeinheiten der Formel (2) in einer Menge von zumindest 2 Mol.-% und Säureanhydrid-enthaltende Grundeinheiten der Formel (3) in einer Menge von zumindest 1 Mol-% umfasst sind.

4. Silan-modifiziertes Copolymer nach Anspruch 1 oder 2, in dem, bezogen auf alle Einheiten des Copolymers, Grundeinheiten der Formel (2) in einer Menge von zumindest 4 Mol.-% umfasst sind.

5. Silan-modifiziertes Copolymer nach Anspruch 1, 2 oder 4, in dem, bezogen auf alle Einheiten des Copolymers, Säureanhydrid-enthaltende Grundeinheiten der Formel (3) in einer Menge von zumindest 2 Mol.-% umfasst sind.

6. Silan-modifiziertes Copolymer nach einem der vorangegangenen Ansprüche, in dem Grundeinheiten der Formeln (1), (2) und (3) zumindest 50 Mol.-% aller Einheiten des Copolymers ausmachen.

7. Silan-modifiziertes Copolymer nach einem der vorangegangenen Ansprüche, in dem das Silan-modifizierte Copolymer zusätzlich zu den Grundeinheiten der Formeln (1), (2) und (3) Grundeinheiten der Formel (4) und/oder Grundeinheiten der Formel (7) umfasst:

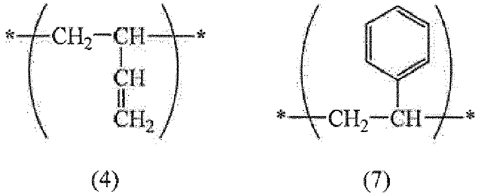

8. Verfahren zur Herstellung eines Silan-modifizierten Copolymers nach einem der Ansprüche 1 bis 7, umfassend den Schritt des Herbeiführens einer Hydrosylierungsreaktion eines Copolymers, das Grundeinheiten der Formeln (1), (3) und (4) umfasst: 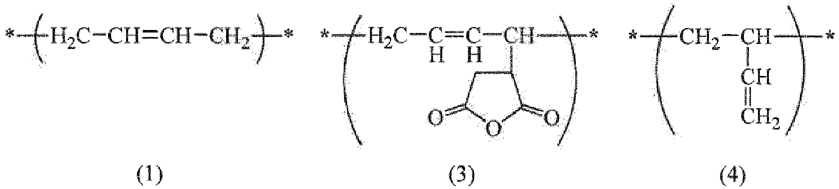 worin * die gleiche Bedeutung wie oben hat, mit einer Organosiliciumverbindung der Formel (5): 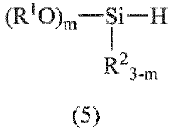 worin R¹, R² und m wie oben definiert sind, in Gegenwart eines Katalysators, der eine Platinverbindung enthält.

9. Haftverbesserer, der ein Silan-modifiziertes Copolymer nach einem der Ansprüche 1 bis 7 umfasst.

10. Verwendung eines Silan-modifizierten Copolymers nach einem der Ansprüche 1 bis 7 als Haftverbesserer.

11. Verwendung nach Anspruch 10, in der das Silan-modifizierte Copolymer in ein Kleberharz eingemischt ist.

12. Verwendung nach Anspruch 11, in der das Silan-modifizierte Copolymer aus Epoxyharzen, Urethanharzen, Acrylharzen, Polyimidharzen, Silikonharzen und modifizierten Silikonharzen ausgewählt ist.

13. Verwendung nach Anspruch 11 oder 12, in der das Silan-modifizierte Copolymer in das Kleberharz in einer Menge von 0,1 Gew.-% bis 20 Gew.-% eingemischt ist.

## Revendications

1. Copolymère modifié par un silane comprenant des motifs constitutifs de formules (1), (2) et (3) : 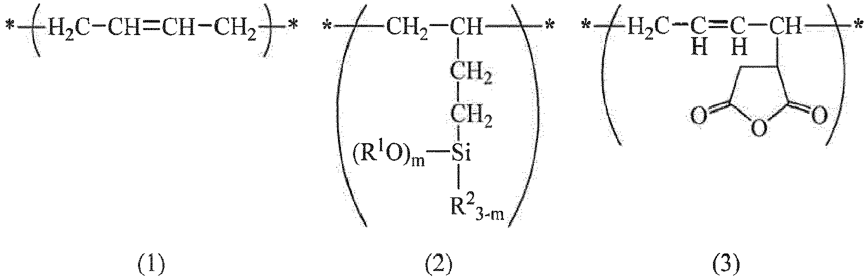 dans lesquelles * désigne une liaison à un motif attenant, chaque R¹ est indépendamment un groupe alkyle en C₁ à C₁₀ ou un groupe aryle en C₆ à C₁₀, chaque R² est indépendamment un groupe alkyle en C₁ à C₁₀ ou un groupe aryle en C₆ à C₁₀, et m est un entier de 1 à 3,
dans lequel l'agencement des motifs constitutifs est arbitraire.

2. Copolymère modifié par un silane selon la revendication 1, ayant une masse moléculaire moyenne en nombre d'au moins 1000.

3. Copolymère modifié par un silane selon la revendication 1 ou 2, dans lequel, par rapport aux motifs totaux du copolymère, les motifs constitutifs de formule (2) sont présents en une quantité d'au moins 2 % en moles et les motifs constitutifs contenant un anhydride d'acide de formule (3) sont présents en une quantité d'au moins 1 % en moles.

4. Copolymère modifié par un silane selon la revendication 1 ou 2, dans lequel, par rapport aux motifs totaux du copolymère, les motifs constitutifs de formule (2) sont présents en une quantité d'au moins 4 % en moles.

5. Copolymère modifié par un silane selon la revendication 1, 2 ou 4, dans lequel, par rapport aux motifs totaux du copolymère, les motifs constitutifs contenant un anhydride d'acide de formule (3) sont présents en une quantité d'au moins 2 % en moles.

6. Copolymère modifié par un silane selon l'une quelconque des revendications précédentes, dans lequel les motifs constitutifs de formules (1), (2) et (3) représentent au moins 50 % en moles des motifs totaux du copolymère.

7. Copolymère modifié par un silane selon l'une quelconque des revendications précédentes, dans lequel, en plus des motifs constitutifs de formules (1), (2) et (3), le copolymère modifié par un silane comprend des motifs constitutifs de formule (4) et/ou des motifs constitutifs de formule (7) :

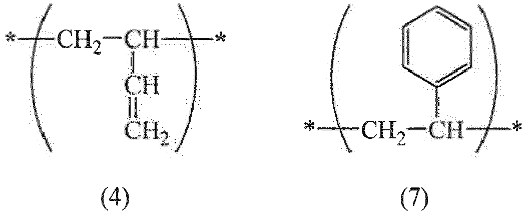

8. Procédé pour préparer un copolymère modifié par un silane selon l'une quelconque des revendications 1 à 7, comprenant l'étape consistant à effectuer une réaction d'hydrosilylation d'un copolymère comprenant des motifs constitutifs de formules (1), (3) et (4) : 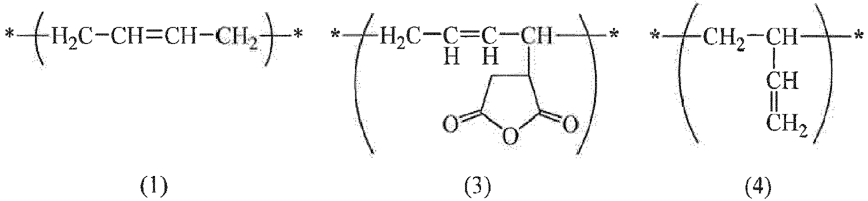 dans lesquelles * a la même signification que ci-dessus, avec un composé organique du silicium de formule (5) : 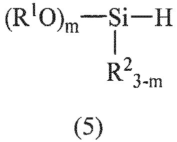 dans laquelle R¹, R² et m sont tels que définis ci-dessus, en présence d'un catalyseur contenant un composé du platine.

9. Améliorateur d'adhérence comprenant un copolymère modifié par un silane selon l'une quelconque des revendications 1 à 7.

10. Utilisation, en tant qu'améliorateur d'adhérence, d'un copolymère modifié par un silane selon l'une quelconque des revendications 1 à 7.

11. Utilisation selon la revendication 10, dans laquelle le copolymère modifié par un silane est mélangé dans une résine adhésive.

12. Utilisation selon la revendication 11, dans laquelle la résine est choisie parmi les résines époxy, les résines d'uréthane, les résines acryliques, les résines de polyimide, les résines de silicone et les résines de silicone modifiées.

13. Utilisation selon la revendication 11 ou 12, dans laquelle le copolymère modifié par un silane est mélangé dans la résine adhésive en une quantité de 0,1 à 20 % en poids.
